# EUROPEAN PATENT SPECIFICATION

(11) **EP 3 780 234 B1**
(45) Date of publication and mention of the grant of the patent: **23.08.2023**
(21) Application number: 19785263.5
(22) Date of filing: 09.04.2019
(51) Int. Cl.: H01M 10/0568, H01M 4/13, H01M 4/134, H01M 4/36, H01M 4/38, H01M 4/48, H01M 10/052, H01M 4/131, H01M 10/0585, H01M 50/124, H01M 50/105

(54) **NONAQUEOUS ELECTROLYTE SECONDARY BATTERY**
SEKUNDÄRBATTERIE MIT WASSERFREIEM ELEKTROLYT
BATTERIE SECONDAIRE À ÉLECTROLYTE NON AQUEUX

(30) Priority: 09.04.2018 JP 2018074973
(43) Date of publication of application: 17.02.2021
(73) Proprietor: NISSAN MOTOR CO., LTD., Yokohama-shi, Kanagawa 221-0023 (JP)
(72) Inventor: DOI, Shotaro, Atsugi-shi, Kanagawa 243-0123 (JP); YAMAUCHI, Noboru, Atsugi-shi, Kanagawa 243-0123 (JP); KUSACHI, Yuki, Atsugi-shi, Kanagawa 243-0123 (JP); SATOU, Hajime, Atsugi-shi, Kanagawa 243-0123 (JP); HORIE, Hideaki, Atsugi-shi, Kanagawa 243-0123 (JP); NAKASHIMA, Yusuke, Kyoto-shi, Kyoto 605-0995 (JP); SHOJI, Naofumi, Kyoto-shi, Kyoto 605-0995 (JP); TSUCHIDA, Kazuya, Kyoto-shi, Kyoto 605-0995 (JP); SUMIYA, Koji, Tokyo 105-8640 (JP); HATAZOE, Takumi, Tokyo 105-8640 (JP); ASANO, Shigehito, Tokyo 105-8640 (JP); ANDO, Nobuo, Tokyo 105-8640 (JP)
(74) Representative: Grünecker Patent- und Rechtsanwälte PartG mbB
(86) International application number: PCT/JP2019/015485
(87) International publication number: WO 2019/198716

(56) References cited:
- EP-A2- 3 142 180
- JP-A- 2013 145 732
- JP-A- 2014 192 143
- JP-A- 2017 069 164
- JP-A- 2017 073 281
- JP-A- 2017 139 068
- JP-A- 2017 529 671

## Description

### TECHNICAL FIELD

The present invention relates to a non-aqueous electrolyte secondary battery.

### BACKGROUND ART

In recent years, there has been an eager demand for a reduction in carbon dioxide emissions in order to cope with global warming. In the automobile industry, expectations are building for a reduction in the carbon dioxide emissions brought by introduction of electric vehicles (EV) and hybrid electric vehicles (HEV), and development of non-aqueous electrolyte secondary batteries such as motor driving secondary batteries, which hold the key to the practical application of these vehicles, is being actively conducted.

Motor driving secondary batteries are required to have very high power output characteristics and high energy compared to lithium ion secondary batteries for consumer use, which are used for mobile telephones, laptop computers, and the like. Therefore, attention is focused on lithium ion secondary batteries having the highest theoretical energy among all practical batteries, and currently, development is in rapid progress.

A lithium ion secondary battery generally has a configuration in which a positive electrode obtained by coating both surfaces of a positive electrode current collector with a positive electrode mixture such as a positive electrode active material, and a negative electrode obtained by coating both surfaces of a negative electrode current collector with a negative electrode mixture such as a negative electrode active material are connected, with an electrolyte layer (separator retaining an electrolyte) interposed therebetween, and are stored in a battery case.

Conventionally, carbon- and graphite-based materials that are advantageous in view of the charge-discharge cycle lifetime and the cost have been used for the negative electrodes of lithium ion secondary batteries. However, in carbon- and graphite-based negative electrode materials, since charging and discharging is achieved by intercalation and deintercalation of lithium ions into graphite crystals, there is a defect that a charge-discharge capacity equal to or more than 372 mAh/g, which is the theoretical capacity obtainable from LiC₆ that is the maximum lithium-introduced compound, may not be obtained. Therefore, it is difficult to obtain a capacity and an energy density that satisfy the level of practical application for use in vehicles having cruise distances of the same level as that of gasoline cars, using carbon- and graphite-based negative electrode materials.

In contrast, a battery that uses a material for producing alloy with Li in a negative electrode has an increased energy density compared to the conventional carbon- and graphite-based negative electrode materials, and therefore, such a material is expected to be used as a negative electrode material for vehicle uses. For example, a Si material allows intercalation and deintercalation of 3.75 mol of lithium ions per 1 mol as shown in the following Reaction Formula (A) during charging and discharging, and the theoretical capacity for Li₁₅Si₄ (= Li_{3.75}Si) is 3,600 mAh/g.

**Si + 3.75Li⁺ + e⁻ ⇄ Li_{3.75}Si** **(A)**

JP 2014-192143 A discloses an example of a non-aqueous electrolyte battery comprosing an elecrolyte containing lithium bis(fluorosulfonyl)imide and LiPF₆. In JP 2015-509271 A (WO 2014/104710 A), an invention related to a non-aqueous electrolyte solution including a non-aqueous organic solvent that includes propylene carbonate (PC); and ii) lithium bisfluorosulfonylimide (LiFSI), is disclosed. According to the above-described publication, it is considered that, by using an electrolyte solution having such a configuration, a firm SEI film can be formed at the negative electrode at the time of initial charging of a lithium ion secondary battery including this non-aqueous electrolyte solution. It is considered that, as a result, while low-temperature power output characteristics are enhanced, high-temperature cycle characteristics, power output characteristics after high-temperature storage, capacity characteristics, and swelling characteristics can also be enhanced.

### SUMMARY OF INVENTION

The inventors of the present invention attempted to apply the technology described in the above-mentioned JP 2015-509271 A (WO 2014/104710 A) to a non-aqueous electrolyte secondary battery that uses a negative electrode active material including a Si material that is capable of achieving high capacity and high energy density. As a result, the inventors found that, in a case when the temperature of a battery increases to a predetermined value or higher, an additional exothermic reaction occurs, and deterioration of the battery proceeds.

Thus, it is an object of the present invention to provide, in a non-aqueous electrolyte secondary battery that uses a negative electrode active material including a Si material and uses an electrolyte solution including LiFSI, a means that can suppress the occurrence of an exothermic reaction that can cause deterioration of a battery even in a case when the temperature of the battery has risen.

The inventors of the present invention conducted a thorough investigation in order to solve the above-described problems. As a result, the inventors found that, with regard to a non-aqueous electrolyte secondary battery that uses a negative electrode active material including a Si material and an electrolyte solution including LiFSI, the problems described above can be solved by incorporating an inorganic lithium salt into the electrolyte solution, the inorganic lithium salt having a molar concentration that is greater than or equal to the molar concentration of LiFSI into an electrolyte solution. Thus, the inventors completed the present invention.

That is, the non-aqueous electrolyte secondary battery according to the present invention has a power generating element including a positive electrode in which a positive electrode active material layer including a positive electrode active material is formed on a surface of a positive electrode current collector, a negative electrode in which a negative electrode active material layer including a negative electrode active material is formed on a surface of a negative electrode current collector, and a separator impregnated with an electrolyte solution. Here, the negative electrode active material includes a Si material that contains silicon and can function as a negative electrode active material. The electrolyte solution contains lithium bis (fluorosulfonyl) imide (LiFSI) and an inorganic lithium salt other than the LiFSI, and has a feature that a ratio of a concentration (mol/L) of the LiFSI with respect to a concentration (mol/L) of the inorganic lithium salt (LiFSI/inorganic lithium salt) in the electrolyte solution is 1 or less, and the concentration of the inorganic lithium salt in the electrolyte solution is 1.0 to 2.0 mol/L, and wherein the negative electrode active material in the negative electrode active material layer is not bound by a binder.

### BRIEF DESCRIPTION OF DRAWINGS

Fig. 1 is a cross-sectional view schematically illustrating a bipolar secondary battery according to an embodiment of the present invention.
Fig. 2 is a perspective view illustrating an external appearance of a flat lithium ion secondary battery, which is a representative embodiment of a secondary battery.

### DESCRIPTION OF EMBODIMENTS

An aspect of the present invention is a non-aqueous electrolyte secondary battery having a power generating element including a positive electrode in which a positive electrode active material layer including a positive electrode active material is formed on a surface of a positive electrode current collector, a negative electrode in which a negative electrode active material layer including a negative electrode active material is formed on a surface of a negative electrode current collector, and an electrolyte layer in which a separator is impregnated with an electrolyte solution, wherein the negative electrode active material includes a Si material that contains silicon and is capable of insertion and removal of lithium ions, the electrolyte solution contains lithium bis(fluorosulfonyl)imide (LiFSI) and an inorganic lithium salt other than the LiFSI, and a ratio of a concentration (mol/L) of the LiFSI with respect to a concentration (mol/L) of the inorganic lithium salt (LiFSI/inorganic lithium salt) in the electrolyte solution is 1 or less. By adopting such a configuration, in a non-aqueous electrolyte secondary battery that uses a negative electrode active material including a Si material and uses an electrolyte solution including LiFSI, even in a case when the temperature of the battery has risen, the occurrence of an exothermic reaction that may cause deterioration of the battery can be suppressed.

Hereinafter, embodiments of the aforementioned negative electrode material according to the present invention will be described with reference to the drawings; however, the technical scope of the present invention should be defined based on the claims and is not intended to be limited to the following embodiments only. In the following description, the present invention will be described by taking a bipolar lithium ion secondary battery, which is an embodiment of the non-aqueous electrolyte secondary battery, as an example. Incidentally, the dimensional ratio of a drawing is exaggerated for the convenience of explanation and may be different from the actual ratio. Furthermore, in the present specification, a bipolar lithium ion secondary battery may be simply referred to as "bipolar secondary battery", and an electrode for a bipolar lithium ion secondary battery may be simply referred to as "bipolar electrode".

### <Bipolar Secondary Battery>

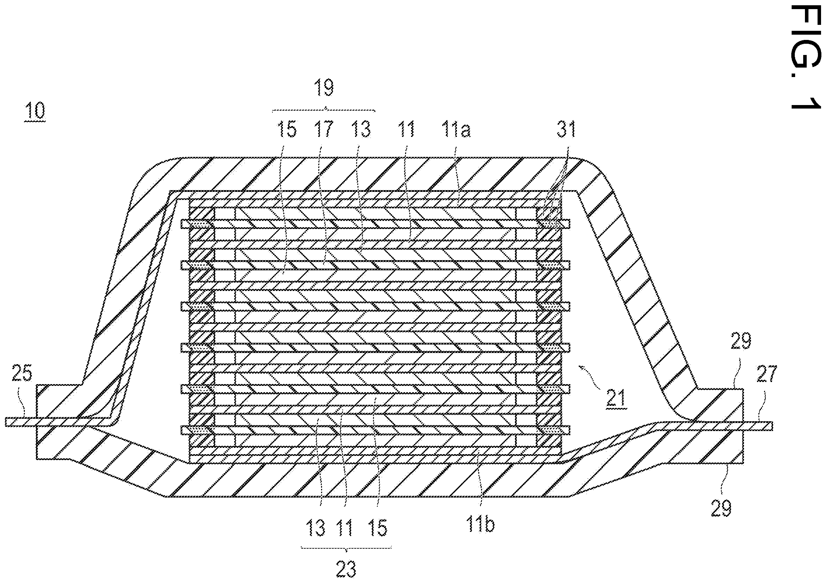

Fig. 1 is a cross-sectional view schematically illustrating a bipolar secondary battery which is one embodiment of the present invention. A bipolar secondary battery 10 shown in Fig. 1 has a structure in which a substantially rectangular power generating element 21, where a charging and discharging reaction actually proceeds, is sealed inside a laminate film 29 as a battery outer casing body.

As shown in Fig. 1, the power generating element 21 of the bipolar secondary battery 10 of the present aspect has a plurality of bipolar electrodes 23 in which a positive electrode active material layer 13 electrically bonded to one surface of a current collector 11 is formed and a negative electrode active material layer 15 bonded to the other surface of the current collector 11 is formed. The respective bipolar electrodes 23 are laminated via an electrolyte layer 17 to form the power generating element 21. Furthermore, the electrolyte layer 17 has a configuration in which a separator as a substrate is impregnated with an electrolyte solution In this case, each of the bipolar electrodes 23 and the electrolyte layer 17 are alternately laminated such that the positive electrode active material layer 13 of one of the bipolar electrodes 23 and the negative electrode active material layer 15 of the other bipolar electrode 23 that is adjacent to the one bipolar electrode 23 can face each other via the electrolyte layer 17. That is, these are arranged such that the electrolyte layer 17 is inserted between the positive electrode active material layer 13 of the one bipolar electrode 23 and the negative electrode active material layer 15 of the other bipolar electrode 23 that is adjacent to the one bipolar electrode 23. However, the technical scope of the present invention is not limited to the bipolar secondary battery illustrated in Fig. 1, and for example, a battery may have a serial connection structure in which a plurality of single battery layers disclosed in the pamphlet of WO 2016/031688 A is laminated electrically in series, and which is consequently similar.

Incidentally, although not shown in the drawings, in the bipolar secondary battery 10 of Fig. 1, a negative electrode active material layer 15 includes a Si material as a negative electrode active material. Furthermore, the negative electrode active material layer 15 may include carbon fibers, which are conductive fibers, as a conductive member. As the negative electrode active material layer 15 includes carbon fibers, conductive paths electrically connecting from a first principal surface that is in contact with the electrolyte layer 17 side of the negative electrode active material layer 15 to a second principal surface that is in contact with the current collector 11 side can be formed, and these conductive paths can be electrically connected to the negative electrode active material. Furthermore, it is preferable that both the negative electrode active material layer 15 and the positive electrode active material layer 13 do not include a binder that is included in an active material layer of a common non-aqueous electrolyte secondary battery (that is, "non-bound body").

The positive electrode active material layer 13, the electrolyte layer 17, and the negative electrode active material layer 15 which are adjacent to each other form one single battery layer 19. Thus, it may be mentioned that the bipolar secondary battery 10 has a configuration in which the single battery layer 19 is laminated. In addition, a seal part (insulating layer) 31 is arranged on outer periphery of the single battery layer 19. Accordingly, liquid junction caused by leakage of an electrolyte solution from the electrolyte layer 17 is prevented, and a contact between neighboring current collectors 11 in a battery or an occurrence of a short-circuit resulting from subtle displacement of an end part of the single battery layer 19 in the power generating element 21, or the like is prevented. Furthermore, the positive electrode active material layer 13 is formed on only one surface of the outermost layer current collector 11a on the positive electrode side which is present on the outermost layer of the power generating element 21. In addition, the negative electrode active material layer 15 is formed on only one surface of the outermost layer current collector 11b on the negative electrode side which is present on the outermost layer of the power generating element 21.

Furthermore, in the bipolar secondary battery 10 shown in Fig. 1, a positive electrode current collecting plate (positive electrode tab) 25 is arranged such that it is adjacent to the outermost layer current collector 11a on the positive electrode side, and extended and drawn from the laminate film 29 as a battery outer casing body. On the other hand, a negative electrode current collecting plate (negative electrode tab) 27 is arranged such that it is adjacent to the outermost layer current collector 11b on the negative electrode side, and also extended and drawn from the laminate film 29.

Moreover, the number of times of laminating the single battery layer 19 is adjusted depending on a desired voltage. Incidentally, in the bipolar secondary battery 10, the number of times of laminating the single battery layer 19 may be reduced if a sufficient output can be secured even if the thickness of the battery is made as small as possible. It is also preferable for the bipolar secondary battery 10 to have a structure in which the power generating element 21 is sealed under reduced pressure in the laminate film 29 as a battery outer casing body and the positive electrode current collecting plate 25 and the negative electrode current collecting plate 27 are drawn to the outside of the laminate film 29 in order to prevent an impact from outside and environmental deterioration at the time of use. In addition, although the embodiments of the present invention are described herein by way of an example of a bipolar secondary battery, the type of a non-aqueous electrolyte battery to which the present invention can be applied is not particularly limited, and the present invention can be applied to any non-aqueous electrolyte secondary battery known in the art, such as a so-called parallel laminate type battery in which a power generating element is formed of single battery layers connected to each other in parallel.

Hereinbelow, main constitutional elements of the above-described bipolar secondary battery will be explained.

### [Current Collector]

The current collector has a function of mediating electron transfer from one surface in contact with a positive electrode active material layer to the other surface in contact with a negative electrode active material layer. Although a material that constitutes the current collector is not particularly limited, for example, a metal or a resin with conductivity can be adopted.

Specific examples of the metal include aluminum, nickel, iron, stainless steel, titanium, copper, and the like. In addition to those, a clad material of nickel and aluminum, a clad material of copper and aluminum, a plating material of a combination of those metals, or the like can be preferably used. It may also be a foil obtained by coating aluminum on a metal surface. Among those, from the viewpoints of electron conductivity, a battery operating potential, adhesion of a negative electrode active material by sputtering to a current collector, and the like, aluminum, stainless steel, copper, or nickel is preferable.

Furthermore, examples of the latter resin having conductivity include a resin formed by adding a conductive filler to a non-conductive polymer material, as necessary.

Examples of the non-conductive polymer material include polyethylene (PE; high density polyethylene (HDPE), low density polyethylene (LDPE) and the like), polypropylene (PP), polyethylene terephthalate (PET), polyether nitrile (PEN), polyimide (PI), polyamideimide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), polystyrene (PS), and the like. Such non-conductive polymer materials can have excellent voltage resistance or solvent resistance.

A conductive filler can be added to the conductive polymer material or the non-conductive polymer material, as necessary. In particular, in a case where a resin serving as a base material of the current collector includes only a non-conductive polymer material, a conductive filler is necessarily indispensable in order to impart conductivity to the resin.

As the conductive filler, any material having conductivity can be used without particular limitation. Examples of the material having excellent conductivity, potential resistance, or lithium ion shielding properties include a metal, a conductive carbon, and the like. The metal is not particularly limited, but it is preferable that the metal includes at least one metal selected from the group consisting of Ni, Ti, Al, Cu, Pt, Fe, Cr, Sn, Zn, In, and Sb, or an alloy or metal oxide including such the metal. Further, the conductive carbon is not particularly limited. It is preferable that the conductive carbon includes at least one selected from the group consisting of acetylene black, VULCAN (registered trademark), BLACK PEARL (registered trademark), carbon nanofiber, Ketjen black (registered trademark), carbon nanotube, carbon nanohorn, carbon nanobaloon, and fullerene.

The amount of the conductive filler to be added is not particularly limited as long as it can impart sufficient conductivity to the current collector, and is generally approximately 5 to 35% by mass.

Furthermore, the current collector may have a single-layer structure formed of a single material or a laminate structure in which layers composed for those materials are suitably combined. From the viewpoint of reduction in the weight of the current collector, it is preferable to include a conductive resin layer formed of at least a resin having conductivity. In addition, from the viewpoint of blocking the transfer of lithium ions between the single battery layers, a metal layer may be disposed on a part of the current collector.

### [Negative electrode active material layer]

A negative electrode active material layer includes a negative electrode active material that can have ions such as lithium ions deintercalated therein at the time of discharging and have ions such as lithium ions intercalated therein at the time of charging. The negative electrode active material layer of the non-aqueous electrolyte secondary battery according to the present aspect essentially includes a Si material as a negative electrode active material. There are no particular limitations on the specific form of such a Si material; however, particularly preferably, from the viewpoint that a negative electrode having a particularly high capacity can be configured, it is preferable that the Si material essentially include SiOx or a silicon-containing alloy. Furthermore, according to another preferred embodiment, it is more preferable that the Si material be included together with a carbon material. In the following description, a preferred Si material and a carbon material that is preferably used in combination will be described in more detail.

In the present specification, a Si material means a material that contains silicon and is capable of insertion and removal of lithium ions.

Examples of the Si material include SiOx (x represents the number of oxygens satisfying the valence of Si), which is a mixture of amorphous SiO₂ particles and Si particles, and a silicon-containing alloy. Among these, only one kind thereof may be used as the Si material, or two or more kinds thereof may be used in combination.

### (SiOx)

SiOx is a mixture of amorphous SiO₂ particles and Si particles, and x represents the number of oxygens satisfying the valence of Si. The specific value of x is not particularly limited and can be appropriately set.

Furthermore, the SiOx may also be conductive SiOx particles in which the surface of SiOx particles is coated with a conductive material by a mechanical surface fusion treatment. By adopting such a configuration, Si in the SiOx particles can easily achieve removal and insertion of lithium ions, and reactions in the active material can proceed more smoothly. In this case, the content of a conductive material in conductive SiOx particles is preferably 1% to 30% by weight, and more preferably 2% to 20% by weight.

The average particle size of the SiOx may be of the same extent as the average particle size of the negative electrode active material included in existing negative electrode active material layer 13, and there are no particular limitations. From the viewpoint of increasing the power output, the average particle size may be preferably in the range of 1 to 20 um. However, the average particle size is not limited to the above-described range, and it is needless to say that as long as the operating effect of the present embodiment can be effectively exhibited, the average particle size may not be included in the above-described range. Incidentally, the "average particle size" in the present specification is to mean the volume-based median diameter (D50) obtainable according to a laser diffraction method. Furthermore, the shape of SiOx is not particularly limited, and examples can include a spherical shape, an elliptical shape, a cylindrical shape, a polygonal prismatic shape, a scale-like shape, an irregular shape, and the like.

The value of x can be determined by a fluorescent X-ray analysis. For example, the value can be determined using a fundamental parameter method in a fluorescent X-ray analysis using O-Kα ray. For the fluorescent X-ray analysis, for example, RIX3000 manufactured by Rigaku Corporation can be used. Regarding the conditions for the fluorescent X-ray analysis, for example, rhodium (Rh) is used as a target, and a tube voltage of 50 kV and a tube current of 50 mA may be used. Since the x value obtained herein is calculated from the intensity of O-Kα ray detected in the measurement region on the substrate, the x value is an average value of the measurement region.

### (Silicon-containing alloy)

The silicon-containing alloy is not particularly limited as long as it is an alloy with other metals containing silicon, and conventionally known findings can be appropriately referred thereto. Here, preferred embodiments of the silicon-containing alloy include SiₓTi_{y}Ge_{z}Aₐ, SiₓTi_{y}Zn_{z}Aₐ, SiₓTi_{y}Sn_{z}Aₐ, SiₓSn_{y}Al_{z}Aₐ, SiₓSn_{y}V_{z}Aₐ, SiₓSn_{y}C_{z}Aₐ, SiₓZn_{y}V_{z}Aₐ, SiₓZn_{y}Sn_{z}Aₐ, SiₓZn_{y}Al_{z}Aₐ, SiₓZn_{y}C_{z}Aₐ, SiₓAl_{y}C_{z}Aₐ, and SiₓAl_{y}Nb_{z}Aₐ (wherein A represents unavoidable impurities. Furthermore, x, y, z, and a represent values of % by weight, such that 0 < x < 100, 0 < y < 100, 0 < z < 100, and 0 ≤ a < 0.5, while x + y + z + a = 100) . When these silicon-containing alloys are used as negative electrode active materials, the amorphous-crystalline phase transition can be suppressed at the time of Li alloying, and the cycle lifetime can be enhanced by appropriately selecting a predetermined first additive element and a predetermined second additive element. Furthermore, as a result of this, the silicon-containing alloys acquire higher capacity than conventional negative electrode active materials, for example, carbon materials (carbon-based negative electrode active materials).

### (Carbon material)

The carbon material that can be used for the present invention is not particularly limited; however, examples include carbon materials, including graphite, which is high-crystalline carbon, such as natural graphite and artificial graphite; low-crystalline carbon such as soft carbon and hard carbon; and the like. Among these, it is preferable to use graphite or hard carbon. The shape of the carbon material is not particularly limited, and the shape can be a spherical shape, an elliptical shape, a cylindrical shape, a polygonal prismatic shape, a scaly shape, an irregular shape, or the like.

Furthermore, the average particle size of the carbon material is not particularly limited; however, the average particle size is preferably 5 to 25 µm, and more preferably 5 to 10 um. At this time, with regard to the ratio of the average particle size with the aforementioned SiOx, the average particle size of the carbon material may be identical to or different from the average particle size of SiOx; however, it is preferable that the average particle sizes be different. Particularly, it is more preferable that the average particle size of the SiOx be smaller than the average particle size of the carbon material. When the average particle size of the carbon material is relatively larger than the average particle size of SiOx, a configuration in which particles of the carbon material are uniformly disposed, and SiOx is disposed between the particles of the carbon material, is obtained. Therefore, SiOx can be uniformly disposed within the negative electrode active material layer.

The ratio of the particle sizes between the average particle size of the carbon material and the average particle size of SiOx (average particle size of SiOx / average particle size of carbon material) is preferably 1/250 to less than 1, and more preferably 1/100 to 1/4.

In the present embodiment, as the above-described Si material is used as the negative electrode active material, balanced characteristics of exhibiting superior cycle durability as well as having a large initial capacity can be exhibited. Furthermore, when these Si materials are used in combination with carbon materials, these characteristics can be enhanced.

Depending on cases, a negative electrode active material other than the above-mentioned carbon materials may be used in combination with the Si material. Examples of the negative electrode active material that can be used in combination include a lithium-transition metal composite oxide (for example, Li₄Ti₅O₁₂), a metal material, a lithium alloy-based negative electrode material, and the like. It is a matter of course that other negative electrode active materials may also be used. The negative electrode active material may also be a so-called predoped material. Regarding a specific technique in the case of using a predoped material as the negative electrode active material, conventionally known findings can be appropriately referred thereto. Incidentally, from the viewpoint of obtaining a high-capacity (high-energy density) battery, the mass ratio occupied by the Si material in 100% by mass of the total amount of the negative electrode active material is not particularly limited; however, the mass ratio is preferably 20% by mass or greater, more preferably 50% by mass or greater, and even more preferably 70% by mass or greater. On the other hand, the upper limit of the mass ratio occupied by the Si material in 100% by mass of the total amount of the negative electrode active material is also not particularly limited; however, for example, the upper limit is less than 95% by mass.

The negative electrode active material layer includes a negative electrode active material such as described above, and if necessary, the negative electrode active material layer further includes other additives such as a conductive aid and a conductive member.

The conductive aid refers to an additive that is incorporated in order to increase the electrical conductivity of the active material layer. Examples of the conductive aid include carbon materials, such as carbon black such as acetylene black. When the negative electrode active material layer includes a conductive aid, an electron network is effectively formed inside the negative electrode active material layer, and this can contribute to an enhancement of the power output characteristics of the battery.

The conductive member has a function of forming an electron conductive path inside the negative electrode active material layer. Particularly, it is preferable that at least a portion of the conductive member form a conductive path which electrically connects from a first principal surface that is in contact with the electrolyte layer side of the negative electrode active material layer to a second principal surface that is in contact with the current collector side. By having such a form, the resistance to electron transfer in the thickness direction within the negative electrode active material layer is further reduced. As a result, the high-rate power output characteristics of the battery can be further enhanced. Incidentally, whether at least a portion of the conductive member forms a conductive path that electrically connects from a first principal surface that is in contact with the electrolyte layer side of the negative electrode active material layer to a second principal surface that is in contact with the current collector side, can be checked by observing a cross-section of the negative electrode active material layer using SEM Or an optical microscope.

It is preferable that the conductive member be a conductive fiber having a fibrous form. Specifically, examples include carbon fibers such as PAN-based carbon fibers and pitch-based carbon fibers; conductive fibers obtained by uniformly dispersing a highly conductive metal or graphite in synthetic fibers; metal fibers obtained by processing a metal such as stainless steel into fibers; conductive fibers obtained by coating the surface of fibers of an organic material with a metal; conductive fibers obtained by coating the surface of fibers of an organic material with a resin including a conductive substance; and the like. Among them, carbon fibers are preferred from the viewpoint of having excellent conductivity and being lightweight.

Furthermore, in the present aspect, the mixing ratios of other additives such as a conductive aid, which can be included in the negative electrode active material layer, are not particularly limited. The mixing ratios of those can be adjusted by appropriately referring to known findings for non-aqueous electrolyte secondary batteries. In the non-aqueous electrolyte secondary battery according to the present embodiment, the negative electrode active material layer (and preferably also the positive electrode active material layer) is a so-called "non-bound body", in which the negative electrode active material (positive electrode active material) is not bound by a binder. By adopting such a configuration, a heating and drying step for crystallizing the binder can be omitted. Furthermore, by producing the active material layer into a thick film and omitting the binder, it is also possible to obtain a battery with a high capacity (that is, a high energy density).

In the non-aqueous electrolyte secondary battery of the present aspect, the thickness of the negative electrode active material layer is not particularly limited, and conventionally known findings on batteries can be appropriately referred thereto. For instance, the thickness of the negative electrode active material layer is usually about 1 to 1,500 um, preferably 50 to 1,200 um, more preferably 100 to 800 µm, and even more preferably 200 to 650 µm. As the thickness of the negative electrode active material layer is larger, it is possible to maintain the negative electrode active material for exhibiting a sufficient capacity (energy density). On the other hand, as the thickness of the negative electrode active material layer is smaller, the discharge rate characteristics can be enhanced.

### (Method for producing negative electrode)

A method for producing a negative electrode is not particularly limited, and production can be carried out by appropriately referring to a conventionally known technique. However, as already described above, in the present embodiment, from the viewpoint of increasing the energy density of the battery, it is preferable to adjust the content of a member that does not contribute much to the progress of the charging and discharging reaction, in the negative electrode active material layer as small as possible. Therefore, as an embodiment of the production method, a method for producing a negative electrode that does not include (or includes only a small amount of) a binder in the negative electrode active material layer will be described.

That is, in the method for producing a negative electrode according to an embodiment, first, the above-mentioned negative electrode active material and a conductive member are mixed together with a solvent, and a slurry for a negative electrode active material layer is prepared.

Here, the method for preparing a slurry for a negative electrode active material layer by mixing the negative electrode active material, the conductive member, and the solvent is not particularly limited, and conventionally known findings, such as the order of addition of the members and the mixing method, will be appropriately referred thereto. At this time, as the solvent, a solvent of the liquid electrolyte that will be described below can be appropriately used. Furthermore, an electrolyte solution further including a lithium salt, additives for an electrolyte solution, and the like may also be directly used instead of the solvent for the present step.

The concentration of the slurry for a negative electrode active material layer is not particularly limited. However, from the viewpoint of facilitating the application of the slurry during the step that will be described below, and pressing during the subsequent steps, the concentration of the total solid content with respect to 100% by mass of the slurry for a negative electrode active material layer is preferably 35% to 75% by mass, more preferably 40% by to 70% by mass, and even more preferably 45% to 60% by mass. When the concentration is in the above-described range, a negative electrode active material layer having a thickness sufficient for application can be easily formed.

Next, a coating film of the slurry for a negative electrode active material layer prepared as described above is formed on a porous sheet, the solvent is removed from the slurry as necessary, and a current collector is disposed on the surface of this coating film. The method of applying a coating film of the slurry is not particularly limited, and conventionally known findings such as an applicator will be appropriately referred thereto. Furthermore, the technique for removing the solvent from the slurry is also not limited, and for example, the solvent can be removed by performing suction filtering through the surface on the opposite side of the coating film-formed surface of the porous sheet.

Here, as the porous sheet, a product such as a microporous film or a non-woven fabric, which is used as a separator in the present technical field, can be used. Specifically, as a microporous film, microporous films formed of hydrocarbon-based resins such as polyimide, aramid, and polyvinylidene fluoride-hexafluoropropylene (PVdF-HFP); glass fibers, and the like may be mentioned. Furthermore, as a non-woven fabric, non-woven fabrics that use cotton, rayon, acetate, nylon, polyester; polyolefins such as PP and PE; polyimide, aramid, and the like, alone or as mixtures, may be mentioned. Meanwhile, on the presumption of being removed after application of the slurry (forming of the negative electrode active material layer), a metal mesh such as a nickel mesh or a stainless steel mesh may be used as the porous sheet.

Meanwhile, the porous sheet may be removed after forming of the negative electrode active material layer, and an insulating porous sheet may be used directly as a separator for the battery. In the case of using a porous sheet directly as a separator, an electrolyte layer may be formed by using only this porous sheet as a separator, or an electrolyte layer may be formed using this porous sheet and another separator in combination (that is, using two or more sheets of separators).

In addition, if necessary, a laminate body of the coating film of the slurry for a negative electrode active material layer and the porous sheet may be pressed. A pressing apparatus that is used at this time is preferably an apparatus that applies pressure uniformly over the entire surface of the applied slurry for a negative electrode active material layer, and specifically, HIGH PRESSURE JACK J-1 (manufactured by AS ONE Corporation) can be used. The pressure at the time of pressing is not particularly limited; however, the pressure is preferably 5 to 40 MPa, more preferably 10 to 35 MPa, and even more preferably 12 to 30 MPa.

### [Positive electrode active material layer]

A positive electrode active material layer includes a positive electrode active material.

### (Positive Electrode Active Material)

Examples of the positive electrode active material include a lithium-transition metal composite oxide such as LiMn₂O₄, LiCoO₂, LiNiO₂, Li(Ni-Mn-Co)O₂, or a compound in which some of these transition metals are replaced by other elements, a lithium-transition metal phosphate compound, a lithium-transition metal sulfate compound, and the like. Two or more positive electrode active materials may be used in combination in some cases. The lithium-transition metal composite oxide is preferably used as the positive electrode active material from the viewpoint of capacity and output characteristics. A composite oxide containing lithium and nickel is more preferably used. Li(Ni-Mn-Co)O₂ and a compound in which some of these transition metals are replaced by other elements (hereinafter also simply referred to as an "NMC composite oxide") is more preferably used. The NMC composite oxide has a layered crystal structure in which a lithium atom layer and a transition metal (Mn, Ni, and Co are orderly arranged) atomic layer are alternately laminated via an oxygen atom layer, and one Li atom is included per atom of a transition metal M, and the amount of Li that can be taken out is twice that of a spinel-based lithium manganese oxide, that is, a supply capacity is doubled, and the capacity can thus be high.

As described above, the NMC composite oxide also includes composite oxides in which some of the transition metal elements are replaced by other elements. Examples of the other elements in this case include Ti, Zr, Nb, W, P, Al, Mg, V, Ca, Sr, Cr, Fe, B, Ga, In, Si, Mo, Y, Sn, V, Cu, Ag, Zn, and the like; Ti, Zr, Nb, W, P, Al, Mg, V, Ca, Sr, or Cr is preferable; Ti, Zr, P, Al, Mg, or Cr is more preferable; and Ti, Zr, Al, Mg, or Cr is even still more preferable from the viewpoint of improving the cycle characteristics.

Since the NMC composite oxide has a high theoretical discharge capacity, it preferably satisfies General Formula (1): LiaNibMncCodMxO₂ (in which a, b, c, d, and x satisfy 0.9 ≤ a ≤ 1.2, 0 < b <1, 0 < c ≤ 0.5, 0 < d < 0.5, 0 ≤ x ≤ 0.3, and b + c + d = 1; and M is at least one element selected from the group consisting of Ti, Zr, Nb, W, P, Al, Mg, V, Ca, Sr, and Cr) . Here, a represents the atomic ratio of Li, b represents the atomic ratio of Ni, c represents the atomic ratio of Mn, d represents the atomic ratio of Co, and x represents the atomic ratio of M. In General Formula (1), 0.4 ≤ b ≤ 0.6 is preferably satisfied from the viewpoint of cycle characteristics. In addition, the composition of each element can be measured by, for example, plasma (ICP) emission

### spectrometry.

In general, it is known that nickel (Ni), cobalt (Co), and manganese (Mn) contribute to capacity and output characteristics from the viewpoints of improving the purity of a material and improving the electron conductivity. Some of the transition metals in a crystal lattice are replaced by Ti and the like. Some of atoms of a transition metal element are preferably replaced by atoms of other elements from the viewpoint of cycle characteristics, and 0 < x < 0.3 is particularly preferably satisfied in General Formula (1). Due to the solid solution of at least one selected from the group consisting of Ti, Zr, Nb, W, P, Al, Mg, V, Ca, Sr, and Cr, the crystal structure is stabilized, and as a result, it is considered that reduction in capacity of the battery can be prevented even after repeated charge/discharge, and thus, excellent cycle characteristics can be achieved.

As a more preferable embodiment, in General Formula (1), b, c, and d preferably satisfy 0.44 ≤ b ≤ 0.51, 0.27 ≤ c ≤ 0.31, and 0.19 ≤ d ≤ 0.26 from the viewpoint of improving a balance between the capacity and the life characteristics. For example, LiNi_{0.5}Mn_{0.3}Co_{0.2}O₂ has a larger capacity per unit weight than LiCoO₂, LiMn₂O₄, LiNi_{1/3}Mn_{1/3}Co_{1/3}O₂, or the like which has been proven to be satisfactory in a general consumer-use battery. This makes it possible to improve the energy density and brings about an advantage that a compact and high-capacity battery can be manufactured, and thus, it is preferable, also from the viewpoint of a cruising distance. LiNi_{0.8}Co_{0.1}Al_{0.1}O₂ is more advantageous in terms of larger capacity. In contrast, LiNi_{0.5}Mn_{0.3}Co_{0.2}O₂ has excellent life characteristics similar to LiNi_{1/3}Mn_{1/3}Co_{1/3}O₂.

Depending on the cases, two or more kinds of positive electrode active materials may be used in combination. Preferably, from the viewpoints of the capacity and the power output characteristics, a lithium-transition metal composite oxide is used as the positive electrode active material. Incidentally, it is a matter of course that a positive electrode active material other than the above-described one may also be used.

The average particle size of the positive electrode active material included in the positive electrode active material layer is not particularly limited; however, from the viewpoint of the increase in power output, the average particle size is preferably 1 to 30 µm, and more preferably 5 to 20 µm.

Furthermore, the positive electrode active material layer 15 further includes, similarly to the description given above for the negative electrode active material layer 13, other additives such as a conductive aid and a conductive member, as necessary. Similarly to the description given above for the negative electrode active material layer 13, it is preferable that the positive electrode active material layer 15 of the non-aqueous electrolyte secondary battery according to the present embodiment also do not contain a binder. That is, in a preferred embodiment of the non-aqueous electrolyte secondary battery according to the present embodiment, the positive electrode active material layer is a so-called "non-bound body", in which a positive electrode active material is not bound by a binder. At this time, the content of the binder in the positive electrode active material layer is preferably 1% by mass or less, more preferably 0.5% by mass or less, even more preferably 0.2% by mass or less, particularly preferably 0.1% by mass or less, and most preferably 0% by mass, with respect to 100% by mass of the total solid content included in the positive electrode active material layer.

The positive electrode (positive electrode active material layer) can be formed according to any one method of a sputtering method, a vapor deposition method, a CVD method, a PVD method, an ion plating method, and a thermal spraying method, in addition to a conventional method of applying (coating) a slurry.

### [Electrolyte layer]

The electrolyte layer of the non-aqueous electrolyte secondary battery according to the present aspect has a configuration in which a separator is impregnated with an electrolyte solution.

An electrolyte solution (liquid electrolyte) has a function as a carrier of lithium ions. The electrolyte solution (liquid electrolyte) constituting the electrolyte solution layer has a form in which a lithium salt is dissolved in an organic solvent. Regarding the organic solvent to be used, examples include carbonates such as ethylene carbonate (EC), propylene carbonate (PC), dimethyl carbonate (DMC), diethyl carbonate (DEC), and ethyl methyl carbonate.

On the other hand, in the non-aqueous electrolyte secondary battery according to the present aspect, the electrolyte solution essentially contains, as a lithium salt, lithium bis(fluorosulfonyl)imide (LiFSI; Li(FSO₂)₂N). As the electrolyte solution contains LiFSI as a lithium salt, a battery having excellent power output characteristics (rate characteristics) can be provided.

Here, in the non-aqueous electrolyte secondary battery according to the present aspect, the electrolyte solution further contains an inorganic lithium salt other than LiFSI, in addition to LiFSI. Here, there are no particular limitations on the specific form of the inorganic lithium salt other than LiFSI, and any lithium salt that does not include carbon atoms can be used. Specific examples of the inorganic lithium salt include, for example, LiPF₆, LiBF₄, LiClO₄, LiAsF₆, and the like. Above all, from the viewpoint of enduring charging at a higher voltage (for example, 4.7 to 4.8 V, and the like) and further enhancing the cycle characteristics, LiPF₆ (lithium hexafluorophosphate), LiBF₄ (lithium borofluoride), and the like are preferred, and LiPF₆ is most preferred. Meanwhile, regarding the inorganic lithium salts, only one kind thereof may be used alone, or two or more kinds thereof may be used in combination.

Furthermore, in the non-aqueous electrolyte secondary battery according to the present aspect, it is essential that the ratio of the concentration (mol/L) of LiFSI with respect to the concentration (mol/L) of the inorganic lithium salt (LiFSI/inorganic lithium salt) in the electrolyte solution be 1 or less. Meanwhile, the lower limit of this ratio is not particularly limited; however, for example, the lower limit is 0.05 or more. Furthermore, from the viewpoints of the capacity and cycle durability of the battery, the ratio is preferably 0.2 or more. This ratio is, for example, 0.8 or less (in other embodiments, 0.7 or less, 0.6 or less, 0.5 or less, 0.4 or less, and 0.33 or less), and for example, this ratio is 0.25 or more (in other embodiments, 0.28 or more and 0.3 or more). Here, in a case when two or more kinds are used in combination as the inorganic lithium salt other than LiFSI, the concentration of this inorganic lithium salt refers to the total concentration of all inorganic lithium salts other than LiFSI.

From the viewpoints of the capacity and cycle durability of the resulting battery, the concentration of LiFSI in the electrolyte solution is preferably 0.05 to 1.2 mol/L, and more preferably 0.1 to 1.0 mol/L. Furthermore, the concentration of the inorganic lithium salt other than LiFSI in the electrolyte solution is 1.0 to 2.0 mol/L, and preferably 1.0 to 1.9 mol/L.

As described above, the mechanism in which the operation effect such as described above is obtained by incorporating an inorganic lithium salt other than LiFSI into the electrolyte solution such that the molar concentration of the lithium salt is greater than or equal to the molar concentration of LiFSI, has not been completely understood. However, a mechanism such as follows is presumed. That is, an inorganic lithium salt other than LiFSI generally has low thermal stability compared to LiFSI and causes a decomposition reaction at a lower temperature than LiFSI. Therefore, when the temperature of the battery rises as a result of the occurrence of an event other than normal operation of the battery, a decomposition reaction of the inorganic lithium salt proceeds at a relatively low temperature (usually, below 200°C), the decomposition product is deposited as an SEI film on the surface of particles of the negative electrode active material, and the internal resistance increases . Therefore, in a case when an electrolyte solution containing only an inorganic lithium salt is used as the lithium salt, it is speculated that the risk that a rapid reaction between the negative electrode active material and the lithium salt may proceed is low in a case when the negative electrode active material contains a Si material, even when the battery temperature has risen. In contrast, LiFSI having a higher decomposition temperature compared to inorganic lithium salts does not cause a decomposition reaction until the battery temperature becomes a relatively high temperature (for example, 200°C or higher) . Therefore, at the time when LiFSI has caused a decomposition reaction, the battery temperature has already become high. As such, when a decomposition reaction of LiFSI occurs under high temperature conditions, in a case when the negative electrode active material contains a Si material, a reaction between the negative electrode active material and the lithium salt accompanied by significant heat generation proceeds acceleratingly, and this is speculated to cause a decrease in the safety of the battery. Then, it is speculated that, since the electrolyte solution contains an inorganic lithium salt at a predetermined concentration as in the case of the battery according to the present aspect, when the battery temperature has risen, the above-mentioned decomposition reaction occurs at a lower temperature than LiFSI, an SEI coating is formed on the surface of particles of the negative electrode active material, and also the operating effect such as described above is exhibited by lowering the frequency of reaction between the negative electrode active material and LiFSI is lowered. Incidentally, since this mechanism is after all based only on speculations, the issue of whether the mechanism is correct or incorrect will not affect the technical scope of the present invention. Incidentally, according to Patent Document 1 described above, in a case when another lithium salt such as LiPF₆ is used in combination with LiFSI, from the viewpoint of various battery performances, it is considered that the mixing ratio between this other lithium salt and LiFSI is preferably 1 : 6 to 1 : 9 as a molar ratio. On the other hand, in the battery according to the present aspect, it was found that new problems for a battery in which a Si material is used as the negative electrode active material can be solved in a scope that is significantly deviated from the scope that is considered preferable in Patent Document 1.

The electrolyte solution (liquid electrolyte) may further include additives other than the above-mentioned components. Specific examples of these additives include, for example, fluoroethylene carbonate, vinylene carbonate, methyl vinylene carbonate, dimethyl vinylene carbonate, phenyl vinylene carbonate, diphenyl vinylene carbonate, ethyl vinylene carbonate, diethyl vinylene carbonate, vinyl ethylene carbonate, 1,2-divinyl ethylene carbonate, 1-methyl-1-vinyl ethylene carbonate, 1-methyl-2-vinyl ethylene carbonate, 1-ethyl-1-vinyl ethylene carbonate, 1-ethyl-2-vinyl ethylene carbonate, vinyl vinylene carbonate, allyl ethylene carbonate, vinyl oxymethyl ethylene carbonate, allyl oxymethyl ethylene carbonate, acryl oxymethyl ethylene carbonate, methacryl oxymethyl ethylene carbonate, ethynyl ethylene carbonate, propargyl ethylene carbonate, ethynyl oxymethyl ethylene carbonate, propargyl oxyethylene carbonate, methylene ethylene carbonate, 1,1-dimethyl-2-methylene ethylene carbonate, and the like. Above all, fluoroethylene carbonate, vinylene carbonate, methyl vinylene carbonate, and vinyl ethylene carbonate are preferred, and fluoroethylene carbonate, vinylene carbonate, and vinyl ethylene carbonate are more preferred. Regarding these cyclic carbonic acid esters, only one kind thereof may be used alone, or two or more kinds thereof may be used in combination.

In the non-aqueous electrolyte secondary battery in the present aspect, a separator may be employed for the electrolyte layer. The separator has a function of holding an electrolyte to secure lithium ion conductivity between a positive electrode and a negative electrode and a function as a partition wall between the positive electrode and the negative electrode.

Examples of a form of the separator include a porous sheet separator, a nonwoven fabric separator, and the like, each of which is formed of a polymer or fiber that absorbs and holds the electrolyte.

As the porous sheet separator formed of the polymer or the fiber, for example, a microporous (microporous film) separator can be used. Specific examples of the form of the porous sheet formed of the polymer or the fiber include a microporous (microporous film) separator formed of a hydrocarbon-based resin such as a polyolefin including polyethylene (PE), polypropylene (PP), and the like; a laminate obtained by laminating a plurality of these polyolefins (for example, a laminate having a three-layer structure of PP/PE/PP, and the like), polyimide, aramid, or polyvinylidene fluoride-hexafluoropropylene (PVdF-HFP), and the like; a glass fiber; etc.

The thickness of the microporous (microporous film) separator cannot be unequivocally defined since the thickness varies depending on an intended use. For example, the thickness of a separator used in the applications of a motor-driving secondary battery such as an electric vehicle (EV), a hybrid electric vehicle (HEV), a fuel cell vehicle (FCV), and the like; etc. is desirably 4 to 60 µm in a single layer or multiple layers. The microporous (microporous film) separator desirably has a fine pore diameter of 1 µm at maximum (usually a pore diameter of approximately several tens nm).

Examples of the nonwoven fabric separator include a conventionally known material such as cotton, rayon, acetate, nylon, polyester; a polyolefin such as PP, PE, and the like; polyimide, aramid, and the like alone or in combination thereof. The bulk density of the nonwoven fabric should not be particularly limited as long as sufficient battery characteristics can be obtained by a polymer gel electrolyte with which the nonwoven fabric is impregnated. In addition, the thickness of the nonwoven fabric separator only needs to be the same as that of the electrolyte layer, and is preferably 5 to 200 µm, and particularly preferably 10 to 100 µm.

Moreover, it is also preferable to use a separator formed by laminating a heat resistant insulating layer on a porous substrate layer (separator with a heat resistant insulating layer). The heat resistant insulating layer is a ceramic layer including inorganic particles and a binder. As the separator with a heat resistant insulating layer, a separator having high heat resistance, which has a melting point or thermal softening point of 150°C or higher, and preferably 200°C or higher, is used. The presence of the heat resistant insulating layer relaxes an internal stress of the separator which increases as the temperature rise, and therefore, an effect of suppressing thermal shrinkage can be obtained. As a result, induction of a short-circuit between electrodes of a battery can be prevented, leading to a battery configuration in which the performance is hardly lowered as the temperature rises. In addition, the presence of the heat resistant insulating layer improves a mechanical strength of the separator with the heat resistant insulating layer, and hardly breaks a film of the separator. Furthermore, the separator is hardly curled in a step of producing a battery due to the effect of suppressing thermal shrinkage and the high mechanical strength.

The inorganic particles in the heat resistant insulating layer contribute to the mechanical strength of the heat resistant insulating layer and the effect of suppressing thermal shrinkage. A material used as the inorganic particles is not particularly limited. Examples thereof include oxides (SiO₂, Al₂O₃, ZrO₂, and TiO₂), hydroxides, and nitrides of silicon, aluminum, zirconium, and titanium, and composites thereof. These inorganic particles may be derived from mineral resources such as boehmite, zeolite, apatite, kaolin, mullite, spinel, olivine, mica, or the like or may be artificially produced. Further, these inorganic particles may be used alone or in combination of two or more kinds thereof. Among those, from the viewpoint of cost, the inorganic particles, silica (SiO₂), or alumina (Al₂O₃) is preferably used, and alumina (Al₂O₃) is more preferably used.

The weight per unit area of the inorganic particles is not particularly limited, but is preferably 5 to 15 g/m². The weight per unit area within this range is preferable in terms of obtaining sufficient ion conductivity and maintaining heat resistant strength.

The binder in the heat resistant insulating layer has a function of binding inorganic particles to each other or binding the inorganic particles to a porous substrate layer. With the binder, the heat resistant insulating layer is stably formed, and thus, peeling between the resin porous substrate layer and the heat resistant insulating layer is prevented.

The binder used in the heat resistant insulating layer is not particularly limited, and for example, a compound such as carboxymethyl cellulose (CMC), polyacrylonitrile, cellulose, an ethylene-vinyl acetate copolymer, polyvinyl chloride, styrene-butadiene rubber (SBR), isoprene rubber, butadiene rubber, polyvinylidene fluoride (PVDF), polytetrafluoroethylene (PTFE), polyvinyl fluoride (PVF), methyl acrylate, and the like can be used as the binder. Among those, carboxymethyl cellulose (CMC), methyl acrylate, or polyvinylidene fluoride (PVDF) is preferably used. These compounds may be used alone or in combination of two or more kinds thereof.

The content of the binder in the heat resistant insulating layer is preferably 2 to 20% by weight with respect to 100% by weight of the heat resistant insulating layer. If the content of the binder is 2% by weight or more, the peeling strength between the heat resistant insulating layer and the resin porous substrate layer can be enhanced, and vibration resistance of the separator can be improved. On the other hand, if the content of the binder is 20% by weight or less, a gap between the inorganic particles can be maintained properly, and therefore, sufficient lithium ion conductivity can be secured.

The thermal shrinkage of the separator with a heat resistant insulating layer is preferably 10% or less in both MD and TD after the separator is held under conditions of 150°C and 2 gf/cm² for one hour. By using such a highly heat resistant material, the heat generation amount is increased, and shrinkage of the separator can be prevented effectively even when the temperature in a battery reaches 150°C. As a result, induction of a short-circuit between electrodes of a battery can be prevented, leading to a battery configuration in which the performance is hardly lowered as the temperature rises.

### [Positive Electrode Current Collecting Plate and Negative Electrode Current Collecting Plate]

A material constituting current collecting plates (25 and 27) is not particularly limited and a known highly conductive material used in the related art as a current collecting plate for use in a lithium ion secondary battery can be used. Preferable examples of the material constituting the current collecting plate include a metal material such as aluminum, copper, titanium, nickel, stainless steel (SUS), an alloy thereof, and the like. From the viewpoints of light weight, corrosion resistance, and high conductivity, aluminum and copper are more preferable, and aluminum is particularly preferable . In addition, the same material or different materials may be used for the positive electrode current collecting plate 25 and the negative electrode current collecting plate 27.

### [Positive Electrode Lead and Negative Electrode Lead]

Moreover, although not illustrated, a current collector 11 may be electrically connected to the current collecting plates (25 and 27) via a positive electrode lead or a negative electrode lead. As a material constituting the positive electrode and the negative electrode leads, a material for use in a known lithium ion secondary battery can be similarly adopted. Further, a portion taken out of an exterior material is preferably coated with a heat resistant and insulating thermal shrinkable tube or the like such that the portion has no influence on a product (for example, vehicle parts, in particular, an electronic device or the like) by electric leak due to contact with neighboring devices, wiring, or the like.

### [Seal Part]

The seal part (insulating layer) has a function of preventing a contact between current collectors and a short-circuit at an end of a single battery layer. A material constituting the seal part may be any material as long as having an insulating property, a sealing property against falling off of a solid electrolyte, a sealing property against moisture permeation from the outside, heat resistance under a battery operating temperature, and the like. Examples of the material include an acrylic resin, a urethane resin, an epoxy resin, a polyethylene resin, a polypropylene resin, a polyimide resin, a rubber (ethylene-propylene-diene rubber: EPDM), and the like. An isocyanate-based adhesive, an acrylic resin-based adhesive, a cyanoacrylate-based adhesive, or the like may be used, and a hot melt adhesive (a urethane resin, a polyamide resin, or a polyolefin resin) or the like may be used. Among those, a polyethylene resin and a polypropylene resin are preferably used as a material constituting an insulating layer from the viewpoints of corrosion resistance, chemical resistance, manufacturing easiness (film-forming property), economic efficiency, and the like, and a resin mainly containing an amorphous polypropylene resin and obtained by copolymerizing ethylene, propylene, and butene is preferably used.

### [Battery Outer Casing Body]

As the battery outer casing body, a known metal can case can be used, and in addition, a bag-like case using the laminate film 29 including aluminum, which is capable of coating a power generating element as shown in Fig. 1, can be used. For the laminate film, for example, a laminate film having a three-layer structure obtained by laminating PP, aluminum, and nylon in this order, or the like can be used, but the laminate film is not limited thereto at all. A laminate film is desirable from the viewpoint of being able to be suitably used for a large device battery for EV or HEV due to a high output and excellent cooling performance. In addition, the outer casing body is more preferably an aluminum laminate since a group pressure to a power generating element applied from the outside can be easily adjusted, and the thickness of an electrolyte solution layer can be easily adjusted to a desired thickness.

### [Cell Size]

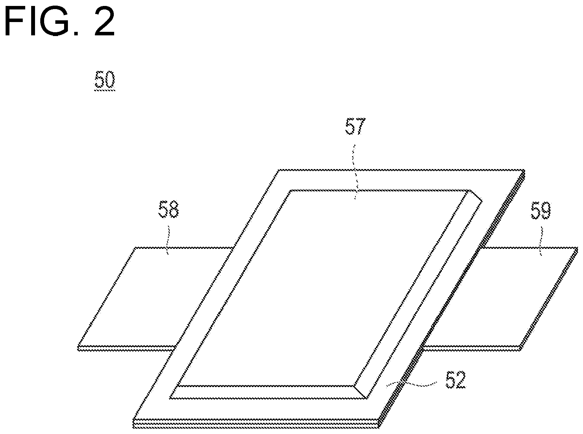

Fig. 2 is a perspective view illustrating an appearance of a flat lithium ion secondary battery which is a typical embodiment of a secondary battery.

As illustrated in Fig. 2, a flat bipolar secondary battery 50 has a rectangular flat shape, and a positive electrode tab 58 and a negative electrode tab 59 are illustrated from both sides thereof to draw electric power. A power generating element 57 is surrounded by a battery outer casing body (laminate film 52) of the bipolar secondary battery 50, a periphery thereof is thermally fused, and the power generating element 57 is sealed while the positive electrode tab 58 and the negative electrode tab 59 are drawn to the outside. Here, the power generating element 57 corresponds to the power generating element 21 of the bipolar secondary battery 10 illustrated in Fig. 1 described above. In the power generating element 57, a plurality of bipolar electrodes 23 are laminated through the electrolyte layers 17.

Moreover, the lithium ion secondary battery is not limited to a laminate type battery having a flat shape. For example, a wound-type lithium ion secondary battery may, for example, have a cylindrical shape or a rectangular flat shape obtained by deforming such a cylindrical shape, but is not particularly limited thereto. In the battery having a cylindrical shape, a laminate film, a conventional cylindrical can (metal can), or the like may be used for an outer casing body thereof, but is not particularly limited thereto. A power generating element is preferably packaged with an aluminum laminate film. This form can achieve a reduction in weight.

Furthermore, drawing of the tabs (58 and 59) illustrated in Fig. 2 is not also particularly limited. For example, the positive electrode tab 58 and the negative electrode tab 59 may be drawn from the same side, or each of the positive electrode tab 58 and the negative electrode tab 59 may be divided into a plurality of parts to be drawn from the sides, without being limited to that illustrated in Fig. 3. In addition, in the wound-type lithium ion secondary battery, a terminal may be formed using, for example, a cylindrical can (metal can) in place of the tab.

In a typical electric vehicle, the storage space of a battery is approximately 170 L. Since a cell and an auxiliary machine such as a charge/discharge control device and the like are stored in this space, the storage space efficiency of the cell is usually approximately 50%. The loading efficiency of the cell in this space is a factor that dominates a cruising distance of an electric car. When the size of a unit cell is small, the loading efficiency is impaired, and thus, the cruising distance cannot be secured.

Therefore, in the present invention, the battery structure in which the power generating element is covered with the outer casing body is preferably large. Specifically, the length of a short side of a laminate cell battery is preferably 100 mm or more. Such a large battery can be used in vehicle applications. Here, the length of the short side of the laminate cell battery refers to a side having the shortest length. An upper limit of the length of the short side is not particularly limited, but is usually 400 mm or less.

### [Volume Energy Density and Rated Discharge Capacity]

In a general electric vehicle, it is an important development goal how to make a traveling distance (cruising distance) per one charge longer. Considering such a point, the volume energy density of a battery is preferably 157 Wh/L or more, and a rated capacity thereof is preferably 20 Wh or more.

Furthermore, from the viewpoint of large-sized batteries, which is different from the viewpoint of the physical size of the electrodes, size enlargement of batteries can be defined from the relationship with the battery area and the battery capacity. For example, in the case of a flat laminate type laminate battery, the value of the ratio of the battery area (projected area of a battery including the battery outer casing body) with respect to the rated capacity is 5 cm²/Ah or more, and it is preferable that the present invention be applied to batteries having a rated capacity of 3 Ah or more. With regard to such a large-sized battery having a high capacity, in a case when LiFSI is used without using an inorganic lithium salt in combination therewith, the above-described problems are particularly likely to become apparent. Therefore, it can be said that as an object of application of the present invention, such a large-sized and high-capacity battery is particularly suitable. Furthermore, the aspect ratio of a rectangular-shaped electrode is preferably 1 to 3, and more preferably 1 to 2. Meanwhile, the aspect ratio of an electrode is defined as a length-to-width ratio of a rectangular-shaped positive electrode active material layer. By adjusting the aspect ratio to such a range, there is an advantage that both the performance required for a vehicle and the mounting space can be achieved.

### [Battery Pack]

A battery pack is constituted by connecting a plurality of batteries to each other. Specifically, the battery pack is formed by serialization of at least two batteries, parallelization thereof, or serialization and parallelization thereof. By serialization and parallelization, it is possible to freely adjust a capacity and a voltage.

By connecting a plurality of batteries to each other in series or in parallel, it is also possible to form a small attachable or detachable battery pack. In addition, by further connecting a plurality of the small attachable or detachable battery packs to each other in series or in parallel, it is also possible to form a large-capacity and large-output battery pack suitable for a vehicle driving power source or auxiliary power source required to have a high volume energy density and a high volume output density, and it may be decided how many batteries are connected to each other to manufacture a battery pack and how many stages of small assembled batteries are laminated to manufacture a large-capacity battery pack, depending on the battery capacity or output of a vehicle (electric vehicle) on which the batteries are mounted.

### [Vehicle]

In the non-aqueous electrolyte secondary battery of the present aspect, a discharge capacity is maintained even after a long-term use, and cycle characteristics are favorable. Furthermore, a volume energy density is high. In a case of use for a vehicle such as an electric vehicle, a hybrid electric vehicle, a fuel cell vehicle, or a hybrid fuel cell vehicle, higher capacity, a larger size, and a longer life are required than in a case of applications of electric/portable electronic devices. Therefore, the non-aqueous electrolyte secondary battery can be suitably used as a vehicle power source, for example, for a vehicle driving power source or an auxiliary power source.

Specifically, a battery or a battery pack formed by combining a plurality of the batteries can be mounted on the vehicle. In the present invention, a long-life battery excellent in long-term reliability and output characteristics can be constituted, and thus, by mounting the battery, a plug-in hybrid electric vehicle having a long EV travel distance and an electric vehicle having a long one-charge travel distance can be constituted. A reason therefor is that an automobile having a long service life and high reliability can be provided by using a battery or a battery pack formed by combining a plurality of the batteries in, for example, an automobile such as a hybrid car, a fuel cell electric car, and an electric vehicle (including a two-wheel vehicle (motor bike) or a three-wheel vehicle in addition to all four-wheel vehicles (an automobile, a truck, a commercial vehicle such as a bus and the like, a compact car, etc.)). However, the applications are not limited to the automobiles, and the battery can also be applied to, for example, various power sources of other vehicles, for example, a moving object such as an electric train and the like, or can also be used as a power source for loading such as an UPS device and the like.

### Examples

Hereinafter, the present invention will be described in more detail with reference to Examples. However, the technical scope of the present invention is not limited only to the following Examples . Furthermore, "parts" mean "parts by mass" unless otherwise specified.

### [Comparative Example 1]

### <Production of negative electrode half-cell>

### (Production of negative electrode sample)

Inside a glove box (dew point was -80°C), hard carbon as a negative electrode active material and an electrolyte solution were mixed, the mixture was stirred for one minute using a shaker to prepare a negative electrode active material slurry. At this time, the amount of the electrolyte solution was regulated such that the solid content ratio (ER) would be 5% by mass. Furthermore, as the electrolyte solution, a solution in which lithium bis (fluorosulfonyl)imide (LiFSI (LiN(SO₂F)₂)), which is a lithium salt, was dissolved at a concentration of 2 mol/L in an organic solvent obtained by mixing ethylene carbonate (EC) and propylene carbonate (PC) at proportions of EC : PC = 1 : 1 (volume ratio), was used.

Subsequently, a suction tool in which a guide that had been die-cut into φ15 mm was installed on a base material formed from a nickel mesh (sieve opening 5 um) was prepared, and the negative electrode active material slurry prepared as described above was incorporated into the interior of the guide. Then, the solvent component included in this negative electrode active material slurry was removed by performing suction filtration using a vacuum suction apparatus through the lower part of the nickel mesh, and thereby a negative electrode cake was obtained. Then, the negative electrode cake from which the solvent component had been removed was detached from the guide, subsequently the density was increased by pressing the negative electrode cake using a hydraulic pressing machine, and thereby a negative electrode sample was obtained. Meanwhile, the porosity of the negative electrode sample thus obtained was 40%. Furthermore, the thickness of the negative electrode sample thus obtained was 400 um.

### (Assembling of negative electrode half-cell)

As a working electrode of a negative electrode half-cell, a negative electrode cake produced as described above was prepared. Furthermore, as a counter electrode of the negative electrode half-cell, a lithium metal foil (thickness 200 um) was prepared. Furthermore, as a current collector, two sheets of a copper foil (thickness 15 um) were prepared, and as a separator, a microporous film (thickness 25 um) made of polypropylene (PP) was prepared.

The respective members prepared as described above were laminated in the order of copper foil (current collector) / negative electrode cake (working electrode) / microporous film made of PP (separator) / lithium metal foil (counter electrode) / copper foil (current collector) to produce a laminate body. Next, electrode leads were connected to the copper foil (current collector) positioned as both outermost layers of the laminate body thus obtained, and the laminate body was encapsulated inside an outer casing body formed from a laminate sheet such that those electrode leads would be exposed to the outside. Then, 150 µL of the electrolyte solution such as described above was injected therein, subsequently the outer casing body was vacuum sealed to produce a negative electrode half-cell.

### <Evaluation of negative electrode half-cell>

### (First-time charging and discharging of negative electrode half-cell)

The negative electrode half-cell produced as described above was placed inside a constant temperature chamber (manufactured by ESPEC Corporation, PFU-3K) set at 45°C and was temperature-regulated, and in that state, this negative electrode half-cell was subjected to a charging treatment using a charge-discharge device (manufactured by HOKUTO DENKO Corporation, HJ0501SM8A) . Meanwhile, during this charging treatment, the charging current was set to 0.05 C, and charging was performed by CCCV charging (constant current-constant voltage mode) until the electric potential (vs. Li+/Li) of the negative electrode would reach 0.01 V. Subsequently, constant current discharging was performed at 0.05 C until the electric potential (vs. Li+/Li) of the negative electrode would reach 1.5 V.

### (Measurement of capacity of negative electrode half-cell)

Subsequently, a charging and discharging treatment of a second cycle was performed under the same charging and discharging conditions as described above, and the discharge capacity (mAh/g) per mass of the negative electrode active material and the discharge capacity (mAh/cm²) per charge and discharge facing area of the negative electrode active material layer were measured. The results are presented in the following Table 1.

### <Production of full cell>

### (Production of positive electrode sample)

Inside a glove box (dew point was -80°C), coated lithium-cobalt-aluminum composite oxide (composition: LiNi_{0.8}Co_{0.15}Al_{0.05}O₂), which is a positive electrode active material, and the electrolyte solution used as described above were mixed, the mixture was stirred for one minute using a shaker to prepare a positive electrode active material slurry. At this time, the amount of the electrolyte solution was regulated such that the solid content ratio (ER) would be 5% by mass.

Subsequently, a suction tool in which a guide that had been die-cut into φ15 mm was installed on a base material formed from a stainless steel mesh (sieve opening 5 um) was prepared, and the positive electrode active material slurry prepared as described above was incorporated into the interior of the guide. Then, the solvent component included in this positive electrode active material slurry was removed by performing suction filtration using a vacuum suction apparatus through the lower part of the stainless steel mesh, and thereby a positive electrode cake was obtained. Then, the positive electrode cake from which the solvent component had been removed was detached from the guide, subsequently the density was increased by pressing the positive electrode cake using a hydraulic pressing machine, and thereby a positive electrode sample was obtained. Meanwhile, the porosity of the positive electrode sample thus obtained was 45%. Furthermore, the thickness of the positive electrode sample thus obtained was 400 um. Moreover, the weight per area of the positive electrode cake was regulated such that the value of the ratio (capacity ratio) of the negative electrode capacity A to the positive electrode capacity C would be A/C = 1.2.

### (Assembling of full cell)

The negative electrode sample and the positive electrode sample were laminated, with a microporous film made of polypropylene (PP) (thickness 25 um) prepared as a separator being interposed therebetween, an aluminum foil (thickness 15 um) as a positive electrode current collector was disposed on the outermost layer on the positive electrode sample side, a copper foil (thickness 15 um) as a negative electrode current collector was disposed on the outermost layer on the negative electrode sample side to produce a power generating element. Next, electrode leads were connected to the current collectors positioned at both the outermost layers of the power generating element thus obtained, and the power generating element was encapsulated inside an outer casing body formed from a laminate sheet such that those electrode leads would be exposed to the outside. Then, an electrolyte solution such as described above was injected therein, the outer casing body was vacuum-sealed to produce a full cell.

### <Evaluation of characteristics of full cell>

### (First-time charging and discharging of full cell)

The full cell produced as described above was placed inside a constant temperature chamber (manufactured by ESPEC Corporation, PFU-3K) set at 45°C and was temperature-regulated, and in that state, this full cell was subjected to a charging treatment using a charge-discharge device (manufactured by HOKUTO DENKO Corporation, HJ0501SM8A). Meanwhile, during this charging treatment, the charging current was set to 0.05 C, and charging was performed by CCCV charging (constant current-constant voltage mode) until a final voltage of 4.2 V was obtained. Subsequently, constant current discharging was performed at 0.05 C until a final voltage of 2.5 V was obtained.

### (Evaluation of discharge rate characteristics of full cell)

The full cell that had been subjected to first-time charging and discharging as described above was subjected to a charging and discharging treatment of second time. At this time, the rate at the time of discharging was set to 1 C and 0.05 C, the same charging and discharging treatment was carried out at the respective rates, and the discharge capacity was measured. Then, the percentage of the discharge capacity at 1 C with respect to the discharge capacity at 0.05 C was calculated and used as an index for the evaluation of the discharge rate characteristics. The results are presented in the following Table 1.

### (Evaluation of cycle characteristics of full cell)

The full cell that had been subjected to first-time charging and discharging as described above was further subjected to 19 cycles of charging and discharging treatment under the same charging and discharging conditions as the first-time charging and discharging, and the discharge capacity of the 20^{th} cycle was measured. Then, the percentage of the discharge capacity of the 20^{th} cycle with respect to the discharge capacity for the first-time charging and discharging was calculated and used as an index for the evaluation of the cycle characteristics. The results are presented in the following Table 1.

### (Evaluation of stability of negative electrode upon overheating)

The full cell in a state of having been subjected to first-time charging (SOC = 100%) under the conditions such as described above was disassembled in a glove box (dew point was -60°C) under Ar, and the negative electrode active material layer (negative electrode cake) was taken out and pulverized. Next, in a glove box such as described above, the negative electrode active material layer was dropped on a hot plate that had been heated to a predetermined temperature, and the presence or absence of ignition was checked. At this time, the temperature of the hot plate was set to 120°C, 140°C, 160°C, 180°C, 200°C, or 250°C, and the temperature at which ignition occurred (ignition temperature) was used as an index for the evaluation of stability of the negative electrode. Meanwhile, as this ignition temperature is higher, it is implied that even in a case when the battery temperature has increased, the occurrence of an exothermic reaction that can cause deterioration of the battery can be suppressed. The results are presented in the following Table 1.

### [Comparative Example 2]

A negative electrode sample, a negative electrode half-cell, and a full cell were each produced by the same methods as the Comparative Example 1 as described above, except that the composition of the negative electrode active material was changed from 100% by mass of hard carbon to 90% by mass of hard carbon and 10% by mass of SiO, and the same evaluations were carried out. The results are presented in the following Table 1.

### [Comparative Example 3]

A negative electrode sample, a negative electrode half-cell, and a full cell were each produced by the same methods as the Comparative Example 2 as described above, except that the composition of the lithium salt in the electrolyte solution was changed from 2 mol/L of LiFSI to 1.5 mol/L of LiFSI and 0.5 mol/L of LiPF₆, and the same evaluations were carried out. The results are presented in the following Table 1.

### [Comparative Example 4]

A negative electrode sample, a negative electrode half-cell, and a full cell were each produced by the same methods as the Comparative Example 1 as described above, except that the composition of the negative electrode active material was changed from 100% by mass of hard carbon to 80% by mass of hard carbon and 20% by mass of SiO, and that the composition of the lithium salt in the electrolyte solution was changed from 2 mol/L of LiFSI to 1.8 mol/L of LiFSI and 0.2 mol/L of liPF₆, and the same evaluations were carried out. The results are presented in the following Table 1.

### [Comparative Example 5]

A negative electrode sample, a negative electrode half-cell, and a full cell were each produced by the same methods as the Comparative Example 4 as described above, except that the composition of the lithium salt in the electrolyte solution was changed from 1.8 mol/L of LiFSI and 0.2 mol/L of LiPF₆ to 1.5 mol/L of LiFSI and 0.5 mol/L of LiPF₆, and the same evaluations were carried out. The results are presented in the following Table 1.

### [Comparative Example 6]

A negative electrode sample, a negative electrode half-cell, and a full cell were each produced by the same methods as Comparative Example 4 as described above, except that the composition of the lithium salt in the electrolyte solution was changed from 1.8 mol/L of LiFSI and 0.2 mol/L of LiPF₆ to 1.2 mol/L of LiFSI and 0.8 mol/L of LiPF₆, and the same evaluations were carried out. The results are presented in the following Table 1.

### [Example 1]

A negative electrode sample, a negative electrode half-cell, and a full cell were each produced by the same methods as Comparative Example 4 as described above, except that the composition of the lithium salt in the electrolyte solution was changed from 1.8 mol/L of LiFSI and 0.2 mol/L of LiPF₆ to 1 mol/L of LiFSI and 1 mol/L of LiPF₆, and the same evaluations were carried out. The results are presented in the following Table 1.

### [Example 2]

A negative electrode sample, a negative electrode half-cell, and a full cell were each produced by the same methods as Comparative Example 4 as described above, except that the composition of the lithium salt in the electrolyte solution was changed from 1.8 mol/L of LiFSI and 0.2 mol/L of LiPF₆ to 0.5 mol/L of LiFSI and 1.5 mol/L of LiPF₆, and the same evaluations were carried out. The results are presented in the following Table 1.

### [Example 3]

A negative electrode sample, a negative electrode half-cell, and a full cell were each produced by the same methods as Comparative Example 4 as described above, except that the composition of the lithium salt in the electrolyte solution was changed from 1.8 mol/L of LiFSI and 0.2 mol/L of LiPF₆ to 0.35 mol/L of LiFSI and 1.65 mol/L of LiPF₆, and the same evaluations were carried out. The results are presented in the following Table 1.

### [Example 4]

A negative electrode sample, a negative electrode half-cell, and a full cell were each produced by the same methods as Comparative Example 4 as described above, except that the composition of the lithium salt in the electrolyte solution was changed from 1.8 mol/L of LiFSI and 0.2 mol/L of LiPF₆ to 0.1 mol/L of LiFSI and 1.9 mol/L of LiPF₆, and the same evaluations were carried out. The results are presented in the following Table 1.

### [Comparative Example 7]

A negative electrode sample, a negative electrode half-cell, and a full cell were each produced by the same methods as Comparative Example 4 as described above, except that the composition of the lithium salt in the electrolyte solution was changed from 1.8 mol/L of LiFSI and 0.2 mol/L of LiPF₆ to 2 mol/L of LiPF₆, and the same evaluations were carried out. The results are presented in the following Table 1.

### [Example 5]

A negative electrode sample, a negative electrode half-cell, and a full cell were each produced by the same methods as Example 1 as described above, except that the composition of the negative electrode active material was changed from 80% by mass of hard carbon and 20% by mass of SiO to 90% by mass of hard carbon and 10% by mass of SiO, and the same evaluations were carried out. The results are presented in the following Table 2.

### [Example 6]

A negative electrode sample, a negative electrode half-cell, and a full cell were each produced by the same methods as Example 1 as described above, except that the composition of the negative electrode active material was changed from 80% by mass of hard carbon and 20% by mass of SiO to 60% by mass of hard carbon and 40% by mass of SiO, and that the thickness of the negative electrode sample was changed to 300 um, and the same evaluations were carried out.

The results are presented in the following Table 2.

### [Example 7]

A negative electrode sample, a negative electrode half-cell, and a full cell were each produced by the same methods as Example 1 as described above, except that the composition of the negative electrode active material was changed from 80% by mass of hard carbon and 20% by mass of SiO to 10% by mass of hard carbon and 90% by mass of SiO, and that the thickness of the negative electrode sample was changed to 200 um, and the same evaluations were carried out. The results are presented in the following Table 2.

### [Example 8]

A negative electrode sample, a negative electrode half-cell, and a full cell were each produced by the same methods as Example 7 as described above, except that the thickness of the negative electrode sample was changed to 50 um, and the same evaluations were carried out. The results are presented in the following Table 3.

### [Example 9]

A negative electrode sample, a negative electrode half-cell, and a full cell were each produced by the same methods as Example 1 as described above, except that the thickness of the negative electrode sample was changed to 650 um, and the same evaluations were carried out. The results are presented in the following Table 3.

### [Example 10]

A negative electrode sample, a negative electrode half-cell, and a full cell were each produced by the same methods as Example 1 as described above, except that the thickness of the negative electrode sample was changed to 1,200 um, and the same evaluations were carried out. The results are presented in the following Table 3.

### [Example 11]

A negative electrode sample, a negative electrode half-cell, and a full cell were each produced by the same methods as Comparative Example 1 as described above, except that the composition of the lithium salt in the electrolyte solution was changed from 1 mol/L of LiFSI and 1 mol/L of LiPF₆ to 1 mol/L of LiFSI and 1 mol/L of LiBF₄, and the same evaluations were carried out. The results are presented in the following Table 4.

**[Table 1]**

| | Negative electrode active material layer | | | | | | | Negative electrode capacity | | Discharge rate characteristics (1C/0.05C) [%] | Capacity retention ratio (20 cycles) [%] | Ignition temperature (°C) |
|---|---|---|---|---|---|---|---|---|---|---|---|---|
| | Composition of negative electrode active material (mass%) | | Thickness (µm) | LiFSI concentration (mol/L) | Second Li salt | | Concentration ratio of LiFSI/second Li salt | | | | | |
| | Hard carbon | SiO | | | Type | Concentration [mol/L] | | [mAh/g] | [mAh/cm²] | | | |
| Comparative Example 1 | 100 | 0 | 400 | 2 | - | | - | 420 | 14 | 66 | 95 | > 250 |
| Comparative Example 2 | 90 | 10 | 400 | 2 | - | | - | 557 | 18 | 62 | 94 | 160 |
| Comparative Example 3 | 90 | 10 | 400 | 1.5 | LiPF₆ | 0.5 | 3 | 557 | 18 | 61 | 94 | 160 |
| Comparative Example 4 | 80 | 20 | 400 | 1.8 | LiPF₆ | 0.2 | 9 | 684 | 21 | 61 | 92 | 160 |
| Comparative Example 5 | 80 | 20 | 400 | 1.5 | LiPF₆ | 0.5 | 3 | 684 | 21 | 61 | 92 | 160 |
| Comparative Example 6 | 80 | 20 | 400 | 1.2 | LiPF₆ | 0.8 | 1.5 | 684 | 21 | 60 | 92 | 160 |
| Example 1 | 80 | 20 | 400 | 1 | LiPF₆ | 1 | 1 | 684 | 21 | 50 | 91 | > 250 |
| Example 2 | 80 | 20 | 400 | 0.5 | LiPF₆ | 1.5 | 0.33 | 684 | 21 | 48 | 91 | > 250 |
| Example 3 | 80 | 20 | 400 | 0.35 | LiPF₆ | 1.65 | 0.21 | 684 | 21 | 48 | 91 | > 250 |
| Example 4 | 80 | 20 | 400 | 0.1 | LiPF₆ | 1.9 | 0.05 | 684 | 21 | 45 | 89 | > 250 |
| Comparative Example 7 | 80 | 20 | 400 | 0 | LiPF₆ | 2 | 0 | 684 | 21 | 44 | 88 | > 250 |

**[Table 2]**

| | Negative electrode active material layer | | | | | | | Negative electrode capacity | | Discharge rate characteristics (1C/0.05C) [%] | Capacity retention ratio (20 cycles) [%] | Ignition temperature (°C) |
|---|---|---|---|---|---|---|---|---|---|---|---|---|
| | Composition of negative electrode active material (mass%) | | Thickness (µm) | LiFSI concentration (mmol/L) | Second Li salt | | Concentration ratio of LiFSI/second Li salt | | | | | |
| | Hard carbon | SiO | | | Type | Concentration [mol/L] | | [mAh/g] | [mAh/cm²] | | | |
| Example 1 | 80 | 20 | 400 | 1 | LiPF₆ | 1 | 1 | 684 | 21 | 50 | 91 | > 250 |
| Example 5 | 90 | 10 | 400 | 1 | LiPF₆ | 1 | 1 | 557 | 18 | 50 | 94 | > 250 |
| Example 6 | 60 | 40 | 300 | 1 | LiPF₆ | 1 | 1 | 938 | 21 | 52 | 86 | > 250 |
| Example 7 | 10 | 90 | 200 | 1 | LiPF₆ | 1 | 1 | 1573 | 20 | 62 | 74 | > 250 |

**[Table 3]**

| | Negative electrode active material layer | | | | | | | Negative electrode capacity | | Discharge rate characteristics (1C/0.05C) [%] | Capacity retention ratio (20 cycles) [%] | Ignition temperature (°C) |
|---|---|---|---|---|---|---|---|---|---|---|---|---|
| | Composition of negative electrode active material (mass%) | | Thickness (µm) | LiFSI concentration (mmol/L) | Second Li salt | | Concentration ratio of LiFSI/second Li salt | | | | | |
| | Hard carbon | SiO | | | Type | Concentration [mol/L] | | [mAh/g] | [mAh/cm²] | | | |
| Example 8 | 10 | 90 | 50 | 1 | LiPF₆ | 1 | 1 | 1573 | 5 | 62 | 74 | > 250 |
| Example 1 | 80 | 20 | 400 | 1 | LiPF₆ | 1 | 1 | 684 | 21 | 50 | 91 | > 250 |
| Example 9 | 80 | 20 | 650 | 1 | LiPF₆ | 1 | 1 | 684 | 35 | 47 | 93 | > 250 |
| Example 10 | 80 | 20 | 1200 | 1 | LiPF₆ | 1 | 1 | 684 | 59 | 22 | 88 | > 250 |

**[Table 4]**

| | Negative electrode active material layer | | | | | | | Negative electrode capacity | | Discharge rate characteristics (1C/0.05C) [%] | Capacity retention ratio (20 cycles) [%] | Ignition temperature (°C) |
|---|---|---|---|---|---|---|---|---|---|---|---|---|
| | Composition of negative electrode active material (mass%) | | Thickness (µm) | LiFSI concentration (mmol/L) | Second Li salt | | Concentration ratio of LiFSI/second Li salt | | | | | |
| | Hard carbon | SiO | | | Type | Concentration [mol/L] | | [mAh/g] | [mAh/cm²] | | | |
| Example 1 | 80 | 20 | 400 | 1 | LiPF₆ | 1 | 1 | 684 | 21 | 50 | 91 | > 250 |
| Example 11 | 80 | 20 | 400 | 1 | LiBF₄ | 1 | 1 | 684 | 21 | 46 | 92 | > 250 |

From the results shown in Table 1 to Table 4, according to the non-aqueous electrolyte secondary battery according to the present invention, it is understood that, with regard to a non-aqueous electrolyte secondary battery that uses a negative electrode active material including a Si material and an electrolyte solution including LiFSI, even in a case when the battery temperature has risen, the occurrence of an exothermic reaction that can cause deterioration of the battery can be suppressed.

### Reference Signs List

- 10, 50: Bipolar secondary battery
- 11: Current collector
- 11a: Outermost layer current collector on positive electrode side
- 11b: Outermost layer current collector on negative electrode side
- 13: Positive electrode active material layer
- 15: Negative electrode active material layer
- 17: Electrolyte layer
- 19: Single battery layer
- 21, 57: Power generating element
- 23: Bipolar electrode
- 25: Positive electrode current collecting plate (positive electrode tab)
- 27: Negative electrode current collecting plate (negative electrode tab)
- 29, 52: Battery outer casing body
- 31: Seal part
- 58: Positive electrode tab
- 59: Negative electrode tab

## Claims

1. A non-aqueous electrolyte secondary battery having a power generating element including:
a positive electrode in which a positive electrode active material layer including a positive electrode active material is formed on a surface of a positive electrode current collector;
a negative electrode in which a negative electrode active material layer including a negative electrode active material is formed on a surface of a negative electrode current collector; and an electrolyte layer in which a separator is impregnated with an electrolyte solution,
wherein the negative electrode active material includes a Si material that contains silicon and is capable of insertion and removal of lithium ions,
the electrolyte solution contains lithium bis(fluorosulfonyl)imide and an inorganic lithium salt other than the lithium bis(fluorosulfonyl)imide, a ratio of a concentration in mol/L of the lithium bis(fluorosulfonyl)imide with respect to a concentration in mol/L of the inorganic lithium salt in the electrolyte solution is 1 or less, and the concentration of the inorganic lithium salt in the electrolyte solution is 1.0 to 2.0 mol/L, and
wherein the negative electrode active material in the negative electrode active material layer is not bound by a binder.

2. The non-aqueous electrolyte secondary battery according to claim 1, wherein a mass ratio occupied by the Si material in 100% by mass of a total amount of the negative electrode active material is 20% by mass or more.

3. The non-aqueous electrolyte secondary battery according to claim 1 or 2, wherein a thickness of the negative electrode active material layer is 200 to 650 µm.

4. The non-aqueous electrolyte secondary battery according to any one of claims 1 to 3, wherein the inorganic lithium salt is LiPF₆.

5. The non-aqueous electrolyte secondary battery according to any one of claims 1 to 4, wherein the non-aqueous electrolyte secondary battery is a flat laminate type laminate battery in which a value of a ratio of a battery area (projected area of the battery including a battery outer casing body) with respect to a rated capacity is 5 cm²/Ah or more, and the rated capacity is 3 Ah or more, the battery area being the projected area of the battery including a battery outer casing body.

## Patentansprüche

1. Eine Sekundärbatterie mit nichtwässrigem Elektrolyt, die ein Stromerzeugungselement beinhaltet, umfassend:
eine positive Elektrode, in der eine Positivelektroden-Aktivmaterialschicht, die ein Positivelektroden-Aktivmaterial enthält, auf einer Oberfläche eines Positivelektroden-Stromkollektors gebildet ist;
eine negative Elektrode, in der eine Negativelektroden-Aktivmaterialschicht, die ein Negativelektroden-Aktivmaterial enthält, auf einer Oberfläche eines Negativelektroden-Stromkollektors gebildet ist; und
eine Elektrolytschicht, in der ein Separator mit einer Elektrolytlösung imprägniert ist,
wobei das Negativelektroden-Aktivmaterial ein Si-Material umfasst, welches Silizium enthält und zur insertion und Extraktion von Lithiumionen befähigt ist,
die Elektrolytlösung Lithium-bis(fluorsulfonyl)imid und ein anderes anorganisches Lithiumsalz als Lithium-bis(fluorsulfonyl)imid enthält, das Verhältnis einer Konzentration des Lithium-bis(fluorsulfonyl)imids in mol/l in Bezug auf eine Konzentration des anorganischen Lithiumsalzes in mol/ L in der Elektrolytlösung 1 oder weniger beträgt, und die Konzentration des anorganischen Lithiumsalzes in der Elektrolytlösung 1,0 bis 2,0 mol/l beträgt, und
wobei das Negativelektroden-Aktivmaterial in der Negativelektroden-Aktivmaterialschicht nicht durch ein Bindemittel gebunden ist.

2. Sekundärbatterie mit nichtwässrigem Elektrolyt nach Anspruch 1, wobei ein Massenanteil, der durch das Si-Material in 100 Massenprozent der Gesamtmenge Negativelektroden-Aktivmaterials eingenommen wird, 20 Massenprozent oder mehr beträgt.

3. Sekundärbatterie mit nichtwässrigem Elektrolyt nach Anspruch 1 oder 2, wobei eine Dicke der Negativelektroden-Aktivmaterialschicht 200 bis 650 µm beträgt.

4. Sekundärbatterie mit nichtwässrigem Elektrolyt nach einem der Ansprüche 1 bis 3, wobei das anorganische Lithiumsalz LiPF₆ ist.

5. Sekundärbatterie mit nichtwässrigem Elektrolyt nach einem der Ansprüche 1 bis 4, wobei die Sekundärbatterie mit nichtwässrigem Elektrolyt eine Laminatbatterie vom Flachlaminattyp ist, bei der ein Wert eines Verhältnisses einer Batteriefläche (projizierte Fläche der Batterie einschließlich eines Batterie-Außengehäuses) in Bezug auf eine Nennkapazität 5 cm²/Ah oder mehr beträgt und die Nennkapazität 3 Ah oder mehr beträgt, wobei die Batteriefläche die projizierte Fläche der Batterie einschließlich eines Batterie-Außengehäuses ist.

## Revendications

1. Batterie secondaire à électrolyte non aqueux ayant un élément générateur de puissance comprenant :
une électrode positive dans laquelle une couche de matériau actif d'électrode positive comprenant un matériau actif d'électrode positive est formée sur une surface d'un collecteur de courant d'électrode positive ;
une électrode négative dans laquelle une couche de matériau actif d'électrode négative comprenant un matériau actif d'électrode négative est formée sur une surface d'un collecteur de courant d'électrode négative ; et une couche d'électrolyte dans laquelle un séparateur est imprégné d'une solution d'électrolyte,
dans laquelle le matériau actif d'électrode négative comprend un matériau Si qui contient du silicium et est capable d'insérer et d'éliminer des ions lithium,
la solution d'électrolyte contient du bis(fluorosulfonyl)imide de lithium et un sel de lithium inorganique autre que le bis(fluorosulfonyl)imide de lithium, un rapport d'une concentration en mol/L du bis(fluorosulfonyl)imide de lithium par rapport à une concentration en mol/L du sel de lithium inorganique dans la solution d'électrolyte est inférieur ou égal à 1, et la concentration en sel de lithium inorganique dans la solution d'électrolyte est de 1,0 à 2,0 mol/L, et
dans laquelle le matériau actif d'électrode négative dans la couche de matériau actif d'électrode négative n'est pas lié par un liant.

2. Batterie secondaire à électrolyte non aqueux selon la revendication 1, dans laquelle un rapport massique occupé par le matériau Si dans 100% en masse d'une quantité totale du matériau actif d'électrode négative est supérieur ou égal à 20% en masse.

3. Batterie secondaire à électrolyte non aqueux selon la revendication 1 ou 2, dans laquelle une épaisseur de la couche de matériau actif d'électrode négative est de 200 à 650 µm.

4. Batterie secondaire à électrolyte non aqueux selon l'une quelconque des revendications 1 à 3, dans laquelle le sel de lithium inorganique est LiPF₆.

5. Batterie secondaire à électrolyte non aqueux selon l'une quelconque des revendications 1 à 4, dans laquelle la batterie secondaire à électrolyte non aqueux est une batterie stratifiée de type stratifié plat dans laquelle une valeur d'un rapport d'une surface de batterie (surface projetée de la batterie comprenant un corps de boîtier externe de batterie) par rapport à une capacité nominale est supérieure ou égale à 5 cm²/Ah, et la capacité nominale est supérieure ou égale à 3 Ah, la surface de batterie étant la surface projetée de la batterie comprenant un corps de boîtier externe de batterie.
